# EUROPEAN PATENT APPLICATION

(11) **EP 4 642 045 A1**
(43) Date of publication of application: **29.10.2025**
(21) Application number: 23906467.8
(22) Date of filing: 27.10.2023
(51) Int. Cl.: H04N 25/70, H04N 25/707, H04N 25/773

(54) **PHOTODETECTOR DEVICE AND PHOTODETECTOR DEVICE CONTROL METHOD**

(30) Priority: 23.12.2022 JP 2022206201
(71) Applicant: Sony Semiconductor Solutions Corporation, Atsugi-shi, Kanagawa 243-0014 (JP)
(72) Inventor: HOGYOKU, Susumu, Atsugi-shi, Kanagawa 243-0014 (JP); OYAKAWA, Takeshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/038835
(87) International publication number: WO 2024/135094

(57) **Abstract**

To improve performance of a photodetection device using a neural network circuit.

A sensor reads from a pixel array section sensor data in which a plurality of pieces of pixel data is arranged. A neural network circuit processes the sensor data on the basis of a neural network model and outputs line data in which a plurality of processing results is arranged. A readout control section generates a readout control signal instructing a readout target pixel group in the pixel array section on the basis of the line data.

## Description

### TECHNICAL FIELD

The present technology relates to a photodetection device. Specifically, the present technology relates to a photodetection device using a neural network model and a control method of the photodetection device.

### BACKGROUND ART

In recent years, signal processing using a neural network model has been increasingly expanded in functionality and application. For example, a device has been proposed in which each of a plurality of pixels and a neural network circuit is divided into a plurality of groups, and pixel information of each image group is input to a corresponding neural network circuit group (See, for example, Patent Document 1.).

### CITATION LIST

### PATENT DOCUMENT

Patent Document 1: Japanese Translation of PCT International Application Publication No. 2022-525794

### SUMMARY OF THE INVENTION

### PROBLEMS TO BE SOLVED BY THE INVENTION

In the above-described conventional technology, the pixel information of each image group is input to the corresponding neural network circuit group, thereby speeding up the processing. However, in the above-described device, the higher an output rate of the pixel, the larger the power consumption and the processing delay of a subsequent circuit. Therefore, the output rate becomes a bottleneck, and further performance improvement becomes difficult.

The present technology has been made in view of such a situation, and an object thereof is to improve the performance of a photodetection device using a neural network circuit.

### SOLUTIONS TO PROBLEMS

The present technology has been made to solve the above-described problems, and a first aspect thereof is a photodetection device including: a sensor that reads from a pixel array section sensor data in which a plurality of pieces of pixel data is arranged; a neural network circuit that processes the sensor data on the basis of a neural network model and outputs line data in which a plurality of processing results is arranged; and a readout control section that generates a readout control signal instructing a readout target pixel group in the pixel array section on the basis of the line data, and a control method of the photodetection device. This brings about an effect of suppressing a processing delay and an increase in power consumption of the photodetection device.

Furthermore, in the first aspect, the line data may include first line data and second line data, the neural network circuit may output the first line data and the second line data in parallel, and the readout control section may compare the first line data with the second line data and generate the readout control signal on the basis of a comparison result. This brings about an effect that reading is controlled in units of rows and columns.

Furthermore, in the first aspect, the neural network model may include a spiking neural network model, each of the first line data and the second line data may include a plurality of bit strings, and each of the plurality of bit strings may include a plurality of bits indicating detection results of spikes in chronological order. This brings about an effect that reading is controlled on the basis of the detection results of the spikes.

Furthermore, in the first aspect, the neural network model may include a spiking neural network model, and each of the first line data and the second line data may include a plurality of bit strings indicating a state value of a membrane potential in chronological order. This brings about an effect that reading is controlled on the basis of the state value of the membrane potential.

Furthermore, in the first aspect, a conversion section that converts at least one of identification information and the sensor data and supplies the converted one to the neural network circuit may be further included, and the sensor may output the identification information together with the sensor data. This brings about an effect that reading is controlled on the basis of the identification information and the sensor data.

Furthermore, in the first aspect, a first first in, first out (FIFO) memory that holds the sensor data in a first-in first-out manner, and a second FIFO memory that holds the readout control signal in the first-in first-out manner may be further included, the neural network circuit may read the sensor data from the first FIFO memory, and the sensor may read the readout control signal from the second FIFO memory. This brings about an effect that the readout control signal and the sensor data are buffered.

Furthermore, in the first aspect, a first first in, first out (FIFO) memory that holds the sensor data in a first-in first-out manner, and a second FIFO memory that holds the line data in the first-in first-out manner may be further included, the neural network circuit may read the sensor data from the first FIFO memory, and the readout control section may read the line data from the second FIFO memory. This brings about an effect that the sensor data and the line data are buffered.

Furthermore, in the first aspect, a digital processing section that reads the sensor data from the first FIFO memory and processes the sensor data, and a first format processing section that generates a communication frame storing the sensor data may be further included. This brings about an effect that the sensor data is externally output.

Furthermore, in the first aspect, a second format processing section that generates a communication frame storing the line data may be further included, and the readout control section may output the line data to the second format processing section. This brings about an effect that the line data is externally output.

Furthermore, in the first aspect, the sensor may include an event-based vision sensor (EVS). This brings about an effect that reading of the EVS is controlled.

Furthermore, in the first aspect, the sensor may include a photon measurement circuit that counts photons. This brings about an effect that reading of the photon counting circuit is controlled.

Furthermore, in the first aspect, the sensor may include a CMOS image sensor (CIS). This brings about an effect that reading of the CIS is controlled.

Furthermore, in the first aspect, the sensor, the neural network circuit, and the readout control section may be dispersedly disposed on a plurality of stacked chips. This brings about an effect that a circuit scale for each chip is reduced.

### BRIEF DESCRIPTION OF DRAWINGS

Fig. 1 is a block diagram illustrating a configuration example of a photodetection device according to a first embodiment of the present technology.
Fig. 2 is a block diagram illustrating a configuration example of a sensor chip according to the first embodiment of the present technology.
Fig. 3 is a block diagram illustrating a configuration example of an EVS according to the first embodiment of the present technology.
Fig. 4 is a circuit diagram illustrating a configuration example of a pixel according to the first embodiment of the present technology.
Fig. 5 is a block diagram illustrating a configuration example of a spiking neural network (SNN) processor according to the first embodiment of the present technology.
Fig. 6 is a diagram illustrating an implementation example of an SNN circuit according to the first embodiment of the present technology.
Fig. 7 is a block diagram illustrating a configuration example of a core according to the first embodiment of the present technology.
Fig. 8 is a diagram for explaining a generation method of a readout control signal according to the first embodiment of the present technology.
Fig. 9 is a block diagram illustrating a configuration example of a test pattern generation section according to the first embodiment of the present technology.
Fig. 10 is a flowchart illustrating an example of an operation of the photodetection device according to the first embodiment of the present technology.
Fig. 11 is a block diagram illustrating a configuration example of an SNN processor according to a first modification of the first embodiment of the present technology.
Fig. 12 is a diagram illustrating an example of a state line in a second modification of the first embodiment of the present technology.
Fig. 13 is a diagram illustrating an example of a stacked structure of a sensor chip according to a third modification of the first embodiment of the present technology.
Fig. 14 is a circuit diagram illustrating a configuration example of a pixel in the third modification of the first embodiment of the present technology.
Fig. 15 is a diagram illustrating an example of a stacked structure of a sensor chip according to a fourth modification of the first embodiment of the present technology.
Fig. 16 is a block diagram illustrating a configuration example of a sensor chip according to a second embodiment of the present technology.
Fig. 17 is a block diagram illustrating a configuration example of an SNN processor according to the second embodiment of the present technology.
Fig. 18 is a block diagram illustrating a configuration example of a sensor chip according to a modification of the second embodiment of the present technology.
Fig. 19 is a block diagram illustrating a configuration example of a sensor chip according to a third embodiment of the present technology.
Fig. 20 is a block diagram illustrating a configuration example of a photon measurement circuit according to the third embodiment of the present technology.
Fig. 21 is a circuit diagram illustrating a configuration example of a pixel according to the third embodiment of the present technology.
Fig. 22 is a block diagram illustrating a configuration example of a sensor chip according to a fourth embodiment of the present technology.
Fig. 23 is a block diagram illustrating a configuration example of a CIS according to the fourth embodiment of the present technology.
Fig. 24 is a circuit diagram illustrating a configuration example of a pixel according to the fourth embodiment of the present technology.
Fig. 25 is a block diagram illustrating a schematic configuration example of a vehicle control system.
Fig. 26 is an explanatory diagram illustrating an example of an installation position of an imaging section.

### MODE FOR CARRYING OUT THE INVENTION

Hereinafter, a mode for carrying out the present technology (hereinafter referred to as an embodiment) will be described. The description will be given in the following order.
1. First embodiment (Example of performing readout control on the basis of an output of an SNN circuit)
2. Second embodiment (Example in which a digital processing section performs readout control on the basis of an output of an SNN circuit)
3. Third embodiment (Example of performing readout control of a photon counting circuit on the basis of an output of an SNN circuit)
4. Fourth embodiment (Example of performing CIS readout control on the basis of an output of an SNN circuit)
5. Examples of application to mobile body

### <1. First embodiment>

### [Configuration example of photodetection device]

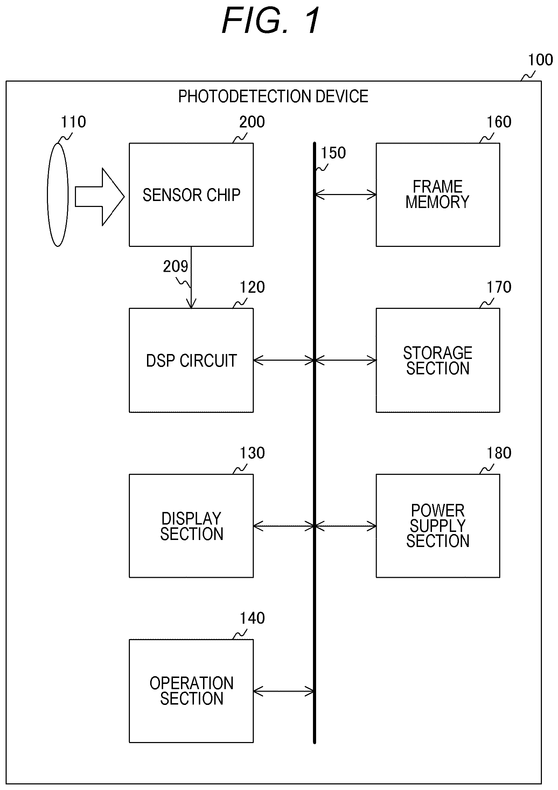

Fig. 1 is a block diagram illustrating a configuration example of the photodetection device 100 according to a first embodiment of the present technology. The photodetection device 100 includes an optical section 110, a sensor chip 200, and a digital signal processing (DSP) circuit 120. The photodetection device 100 further includes a display section 130, an operation section 140, a bus 150, a frame memory 160, a storage section 170, and a power supply section 180. As the photodetection device 100, for example, a smartphone, a personal computer, a vehicle-mounted camera, and the like are assumed in addition to a digital camera such as a digital still camera.

The optical section 110 condenses light from a subject and guides the light to the sensor chip 200. The sensor chip 200 generates and processes a plurality of pieces of pixel data by photoelectric conversion. The sensor chip 200 supplies the processed data to the DSP circuit 120.

The DSP circuit 120 executes predetermined signal processing on data from the sensor chip 200. The DSP circuit 120 outputs the processed data to the frame memory 160 or the like via the bus 150.

The display section 130 displays image data and the like. As the display section 130, for example, a liquid crystal panel or an organic electro luminescence (EL) panel is assumed. The operation section 140 generates an operation signal according to a user's operation.

The bus 150 is a common path for the optical section 110, the sensor chip 200, the DSP circuit 120, the display section 130, the operation section 140, the frame memory 160, the storage section 170, and the power supply section 180 to exchange data with each other.

The storage section 170 stores various types of data such as the image data. The power supply section 180 supplies power to the sensor chip 200, the DSP circuit 120, the display section 130, and the like.

### [Configuration example of sensor chip]

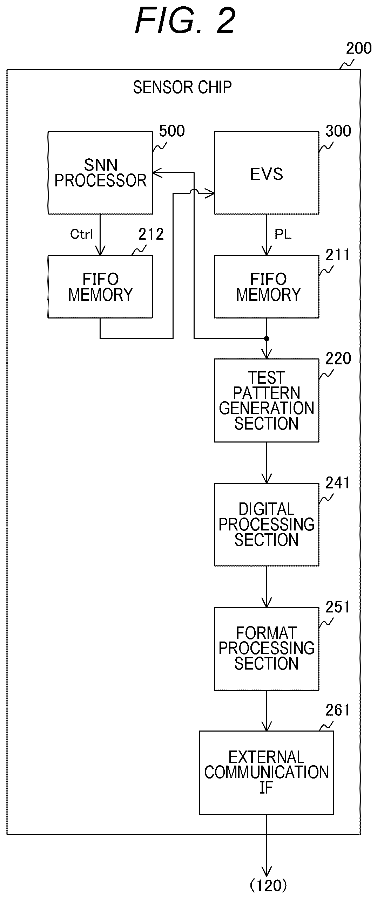

Fig. 2 is a block diagram illustrating a configuration example of the sensor chip 200 according to the first embodiment of the present technology. The sensor chip 200 is a single semiconductor chip and includes an EVS 300 and an SNN processor 500. Moreover, the sensor chip 200 includes FIFO memories 211 and 212, a test pattern generation section 220, a digital processing section 241, a format processing section 251, and an external communication interface 261.

The EVS 300 detects a change in luminance for each pixel. The EVS 300 sequentially selects a plurality of lines in a pixel array section (not illustrated), and reads data in which pixel data of each pixel in the line is arrayed as a pixel line (PL). Then, the EVS 300 outputs each PL to the FIFO memory 211. Each of the pixel data includes, for example, a bit indicating a detection result of a luminance change of the pixel. Note that the EVS 300 is an example of a sensor recited in the claims. Furthermore, the PL is an example of sensor data recited in the claims.

The FIFO memory 211 holds the PL from the EVS 300 in a first-in first-out manner. PL is read by the test pattern generation section 220 and the SNN processor 500. Note that the FIFO memory 211 is an example of a first FIFO memory recited in the claims.

The SNN processor 500 processes the PL on the basis of the SNN model, and generates a readout control signal Ctrl on the basis of the processing result. The readout control signal Ctrl is a control signal indicating a readout target pixel group in the pixel array unit of the EVS 300. The SNN processor 500 outputs the readout control signal Ctrl to the FIFO memory 212.

The FIFO memory 212 holds the readout control signal Ctrl from the SNN processor 500 in a first-in first-out manner. The readout control signal Ctrl is read by the EVS 300. Note that the FIFO memory 212 is an example of a second FIFO memory recited in the claims.

The test pattern generation section 220 generates a predetermined test pattern in a test mode. The test pattern generation section 220 supplies the test pattern to the digital processing section 241 in the case of the test mode, and supplies the PL to the digital processing section 241 in the case of not the test mode.

Note that the test pattern generation section 220 is disposed as necessary. In a case where the test pattern generation section 220 is unnecessary, the PL from the FIFO memory 211 is directly input to the digital processing section 241.

The digital processing section 241 performs various types of digital processing on the PL. The digital processing section 241 supplies the processed PL to the format processing section 251.

The format processing section 251 generates a communication frame storing the PL. The format processing section 251 supplies the generated communication frame to the external communication interface 261.

The external communication interface 261 transmits the communication frame from the format processing section 251 to the DSP circuit 120 or the like. For example, a mobile industry processor interface (MIPI) is used as a communication standard of the external communication interface 261.

### [Configuration example of EVS]

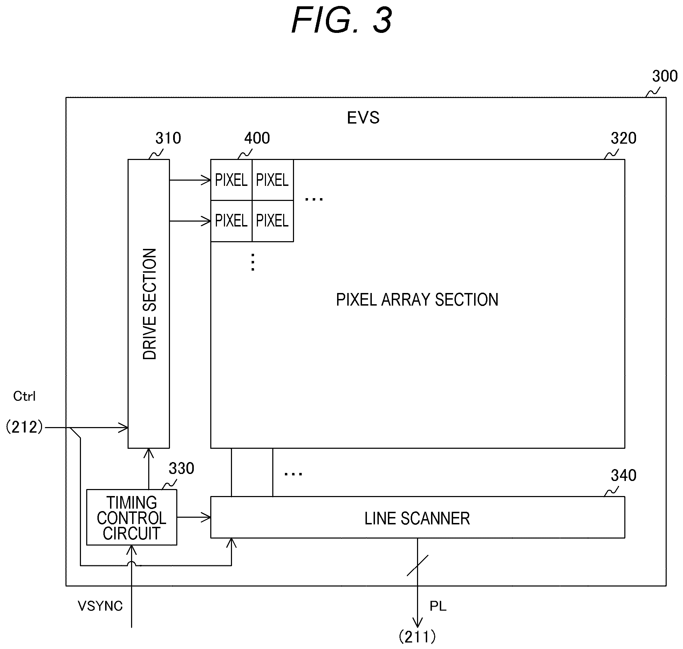

Fig. 3 is a block diagram illustrating a configuration example of the EVS 300 according to the first embodiment of the present technology. The EVS 300 includes a drive section 310, a pixel array section 320, a timing control circuit 330, and a line scanner 340. In the pixel array section 320, a plurality of pixels 400 is arranged in a two-dimensional lattice pattern.

The drive section 310 drives each of the pixels 400. The pixel 400 detects the presence or absence of a change in luminance and generates pixel data indicating a detection result.

The timing control circuit 330 controls timing of driving the drive section 310 and the line scanner 340. A vertical synchronization signal is input to the timing control circuit 330. The timing control circuit 330 generates a horizontal synchronization signal from the vertical synchronization signal and supplies the horizontal synchronization signal to the line scanner 340.

The line scanner 340 sequentially selects lines (rows, columns, and the like) in synchronization with a horizontal synchronization signal, and reads pixel data of each pixel in the line. The line scanner 340 arranges the pixel data read from the line one-dimensionally and outputs the data as the PL to the FIFO memory 211. Note that the readout unit is a line unit, but may be an area unit instead. In this case, the line scanner 340 one-dimensionally arranges each pixel data read from the selected area in a predetermined order, and outputs the pixel data as the PL.

Furthermore, the drive section 310 and the line scanner 340 select rows and columns to be read in accordance with the readout control signal Ctrl from the FIFO memory 212. The readout control signal Ctrl instructs, for example, a pixel group to be read in units of rows or columns. Note that the readout control signal Ctrl can also indicate a pixel group to be read in units of areas. In the initial state, all the pixels are read.

As illustrated in the drawing, control of sequentially reading pixel data in units of lines and areas in synchronization with a synchronization signal such as a horizontal synchronization signal is called a scanning method. Note that the EVS 300 can also use an arbiter method of reading pixel data without being synchronized with a synchronization signal as described later.

### [Configuration example of pixel]

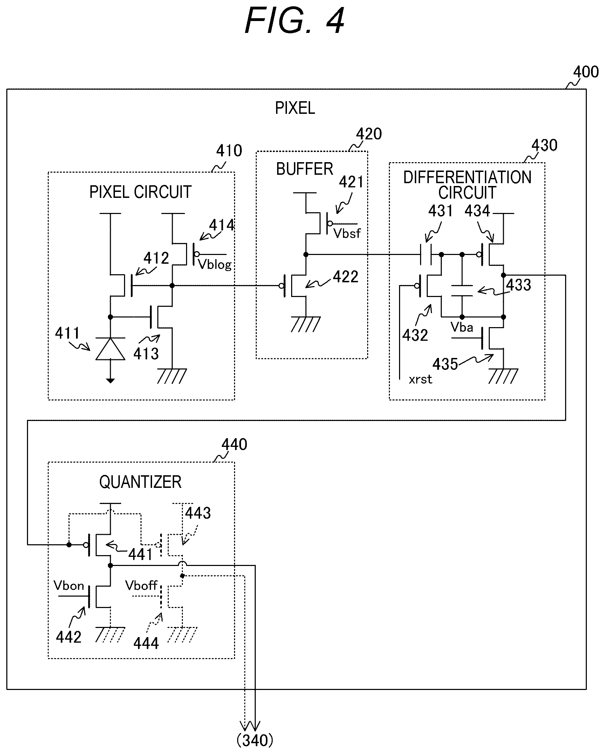

Fig. 4 is a circuit diagram illustrating a configuration example of the pixel 400 according to the first embodiment of the present technology. The pixel 400 includes a pixel circuit 410, a buffer 420, a differentiation circuit 430, and a quantizer 440.

The pixel circuit 410 includes a photodiode 411, negative channel MOS (nMOS) transistors 412 and 413, and a positive channel MOS (pMOS) transistor 414.

The photodiode 411 generates a photocurrent by photoelectric conversion with respect to incident light. The nMOS transistor 412 is inserted between a power supply and the photodiode 411. The pMOS transistor 414 and the nMOS transistor 413 are connected in series between the power supply and a ground terminal. Furthermore, the gate of the nMOS transistor 413 is connected to the connection point of the nMOS transistor 412 and the photodiode 411, and a bias voltage Vblog is applied to the gate of the pMOS transistor 414.

The buffer 420 includes pMOS transistors 421 and 422 connected in series between a power supply and a ground terminal. The gate of the ground side pMOS transistor 422 is connected to a connection point of the pMOS transistor 414 and the nMOS transistor 413. A bias voltage Vbsf is applied to the gate of the pMOS transistor 421 on the power supply side. Furthermore, a connection point of the pMOS transistors 421 and 422 is connected to the differentiation circuit 430.

A voltage signal according to the photocurrent is generated by the above-described circuit and output from the buffer 420.

The differentiation circuit 430 includes capacitors 431 and 433, pMOS transistors 432 and 434, and an nMOS transistor 435.

One end of the capacitor 431 is connected to the buffer 420, and the other end is connected to one end of the capacitor 433 and the gate of the pMOS transistor 434. A reset signal xrst is input to the gate of the pMOS transistor 432, and the source and the drain are connected to both ends of the capacitor 433. The pMOS transistor 434 and the nMOS transistor 435 are connected in series between the power supply and the ground terminal. Furthermore, the other end of the capacitor 433 is connected to a connection point of the pMOS transistor 434 and the nMOS transistor 435. A bias voltage Vba is applied to the gate of the nMOS transistor 435 on the ground side, and the connection point of the pMOS transistor 434 and the nMOS transistor 435 is also connected to the quantizer 440. By such connection, a differentiation signal indicating a change amount of the voltage signal is generated and output to the quantizer 440. Furthermore, the differentiation signal is initialized by the reset signal xrst.

The quantizer 440 includes a pMOS transistor 441 and an nMOS transistor 442 connected in series between the power supply and the ground terminal. The gate of the pMOS transistor 441 is connected to the differentiation circuit 430, and a predetermined upper limit threshold Vbon is applied to the gate of the nMOS transistor 442. A voltage signal at a connection point between the pMOS transistor 441 and the nMOS transistor 442 is read by the line scanner 340 as a detection signal of a change in luminance.

In the drawing, an on event is detected when the differentiation signal indicating the change in luminance exceeds the upper limit threshold Vbon. Note that the pixel 400 can also detect an off event when the differentiation signal falls below a lower limit threshold Vboff. In this case, a pMOS transistor 443 and an nMOS transistor 444 connected in series between the power supply and the ground terminal are added. The gate of the pMOS transistor 443 is connected to the differentiation circuit 430, and the lower limit threshold Vboff is applied to the gate of the nMOS transistor 444. The pixel 400 may detect both the on event and the off event, or may detect only one of them.

### [Configuration example of SNN processor]

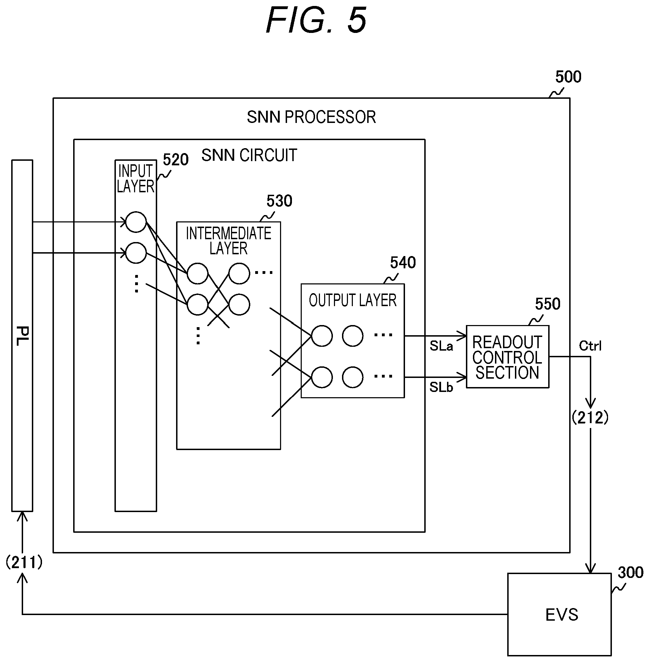

Fig. 5 is a block diagram illustrating a configuration example of the SNN processor 500 according to the first embodiment of the present technology. The SNN processor 500 includes an SNN circuit 510 and a readout control section 550.

As described above, the EVS 300 reads PL from the pixel array section. The PL is input to the SNN circuit 510 via the FIFO memory 211. The SNN circuit 510 processes the PL on the basis of the SNN model and generates line data in which a plurality of processing results is arranged as a spike line (SL). The SL is data in which spike signals output from a row of neurons in the SNN circuit 510 are arranged at a certain time. The SNN circuit 510 outputs the SL to the readout control section 550.

The readout control section 550 generates the readout control signal Ctrl on the basis of the SL. In accordance with the readout control signal Ctrl, the EVS 300 reads the next PL.

With the configuration illustrated in the drawing, for example, it is possible to realize an application in which the SNN processor 500 recognizes a predetermined object in an image and specifies a region of interest (ROI) including the object by the readout control signal Ctrl.

In a case where the output rate of the PL is high, the bandwidth between the EVS 300 and the FIFO memory 211 is insufficient, and a processing delay may occur in the test pattern generation section 220 and the subsequent portions. Furthermore, there is a possibility that power consumption of circuits after the test pattern generation section 220 increases.

However, since the SNN processor 500 specifies a pixel group to be read next by the readout control signal Ctrl, the output rate can be reduced as compared with a case where all the pixels are read, and an increase in processing delay and power consumption can be suppressed. Therefore, the performance of the photodetection device 100 can be improved.

Furthermore, the SNN circuit 510 includes an input layer 520, an intermediate layer 530, and an output layer 540.

The PL is input to the input layer 520. In the intermediate layer 530, one or more layers are disposed. The neuron of the previous layer is connected to the neuron of the next layer, and the operation result of the previous layer is passed to the next layer. The output layer 540 generates a spike signal asynchronously.

In the output layer 540, for example, a pair of neuron rows is disposed. One neuron row outputs the SL at each time point as SLa, and the other neuron row outputs the SL at each time point as SLb. The readout control section 550 compares the output data of each neuron row and generates the readout control signal Ctrl on the basis of the comparison result. Note that the SLa is an example of first line data recited in the claims, and the SLb is an example of second line data recited in the claims.

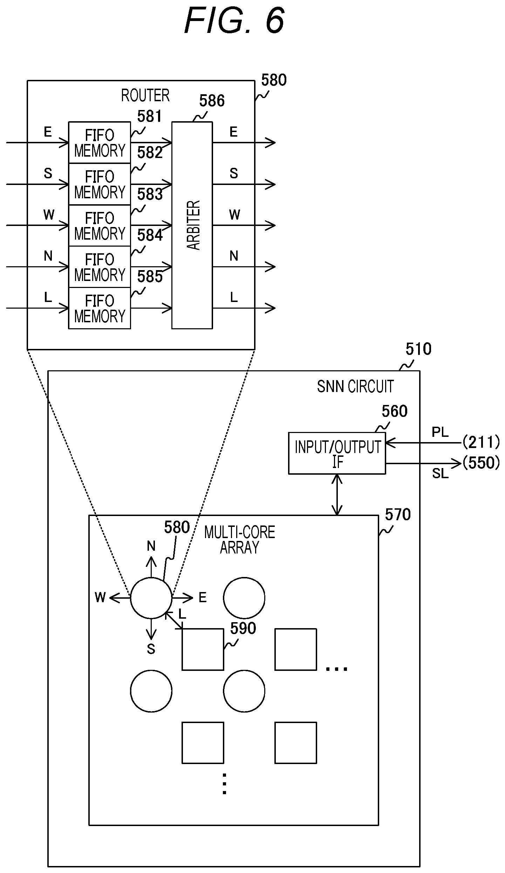

Fig. 6 is a diagram illustrating an implementation example of the SNN circuit 510 according to the first embodiment of the present technology. The SNN circuit 510 of Fig. 5 is realized by, for example, a circuit of Fig. 6. As illustrated in Fig. 6, the SNN circuit 510 includes, for example, an input/output interface 560 and a multi-core array 570.

The input/output interface 560 transmits and receives data between the outside and the multi-core array 570. The input/output interface 560 supplies the PL input from the FIFO memory 211 to the multi-core array 570, and supplies the SL from the multi-core array 570 to the readout control section 550.

In the multi-core array 570, a plurality of cores 590 is arranged in a two-dimensional lattice pattern. A router 580 is disposed adjacent to each of the cores 590.

The router 580 controls a path of data. The router 580 includes, for example, FIFO memories 581 to 585 and an arbiter 586. In the drawing, "E" indicates the east direction of the router 580 of interest, and "S" indicates the south direction. "W" indicates the west direction, and "N" indicates the north direction. "L" indicates a direction toward the core 590 adjacent to the router 580.

The FIFO memory 581 holds data from the east direction in a first-in first-out manner, and outputs a request to the arbiter 586. The FIFO memory 582 holds data from the south direction in a first-in first-out manner, and outputs a request to the arbiter 586. The FIFO memory 583 holds data from the west in a first-in first-out manner, and outputs a request to the arbiter 586. The FIFO memory 584 holds data from the north direction in a first-in first-out manner, and outputs a request to the arbiter 586. The FIFO memory 585 holds data from the adjacent cores 590 in a first-in first-out manner, and outputs a request to the arbiter 586.

Note that the external FIFO memory 211 can be reduced and replaced with the FIFO memory 581 or the like in the SNN circuit 510.

The arbiter 586 arbitrates a request from each of the FIFO memories 581 to 585 and returns a response. When there is a response, the FIFO memory outputs data to one of the cores 590 adjacent to the north, south, east, and west via the arbiter 586.

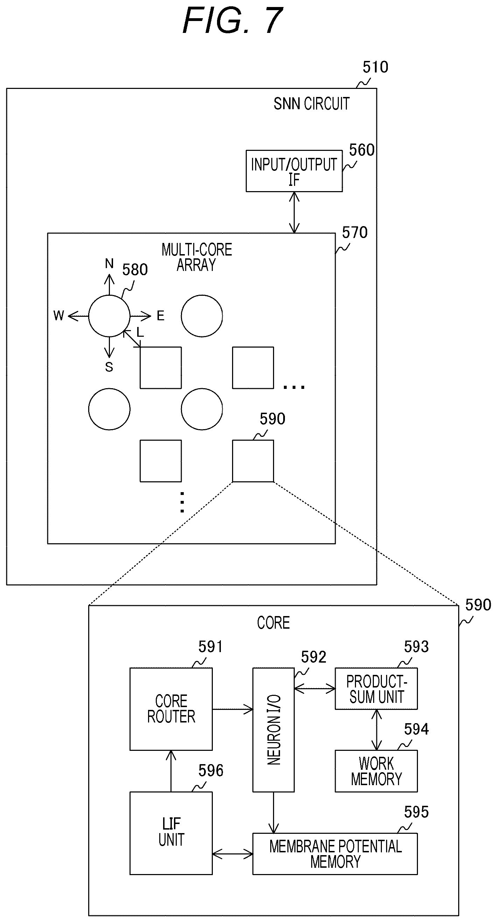

Fig. 7 is a block diagram illustrating a configuration example of the core 590 according to the first embodiment of the present technology. The core 590 includes a core router 591, a neuron input/output (I/O) 592, a product-sum unit 593, a work memory 594, a membrane potential memory 595, and a leaky integrate and fire (LIF) unit 596.

The core router 591 supplies data from the adjacent router 580 to the neuron I/O 592, and supplies data from the LIF unit 596 to the adjacent router 580.

The product-sum unit 593 integrates the data from the neuron I/O 592 using the work memory 594. The membrane potential memory 595 holds a membrane potential obtained by the integration. The LIF unit 596 determines whether or not the membrane potential exceeds a predetermined threshold and is ignited (In other words, a spike occurred.), and supplies the result to the core router 591.

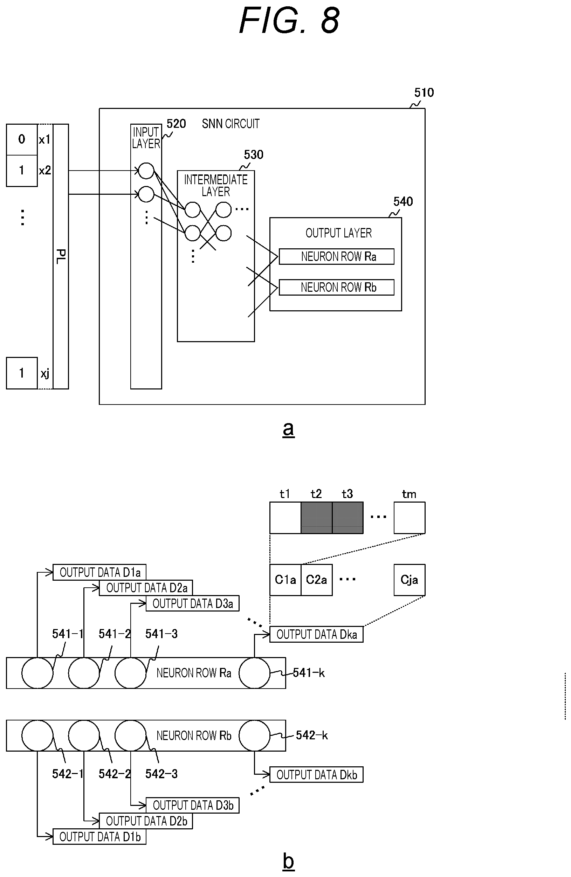

Fig. 8 is a diagram for explaining a generation method of a readout control signal according to the first embodiment of the present technology.

As illustrated in a of the drawing, a plurality of the PLs is sequentially input to the input layer 520. Each PL includes a plurality of pieces of pixel data. Each piece of pixel data is, for example, 1-bit information indicating whether or not an on-event has been detected. In the drawing, x0 to xj indicate x coordinates of each pixel in the line.

In the drawing, b illustrates a configuration example of the output layer 540. In the output layer 540, a pair of neurons is disposed for each line. When the number of lines is k, a neuron row Ra in which neurons 541-1 to 541-k are arranged and a neuron row Rb in which neurons 542-1 to 542-k are arranged are disposed. Data output from the neurons 541-1 to 541-k is 1a to ka, and data output from the neurons 542-1 to 542-k is 1b to kb.

The data output by the individual neurons includes, for example, spike groups C1a to Cja generated in mutually different periods. The spike groups C1a to Cja are data corresponding to the respective pixels of the x coordinates x1 to xj. Each of the spike groups also includes a plurality of spike signals generated within the corresponding period. In the drawing, t1 to tm indicate the time when the spike signal is generated. Furthermore, a white rectangle indicates that there was a spike, and a black rectangle indicates that there was no spike.

At a certain time, data in which spike signals output from the respective neurons in the neuron row Ra are arranged corresponds to the above-described SLa. At a certain time, data in which spike signals output from the respective neurons in the neuron row Rb are arranged corresponds to the SLb described above.

The readout control section 550 compares the data output from each of the neuron pairs corresponding to the line and generates the readout control signal Ctrl. The readout control section 550 counts the number of spikes for each spike group of the neuron pair and compares them. For example, when a pattern to be recognized occurs in a certain line, the count value of one (such as 541-1) spike group of the neuron pair corresponding to the line is set to be larger than the count value of the other (such as 542-1) spike group. In this case, for example, when the count value of C1a in a certain line is larger than the count value of C1b, the pixel at the x coordinate x1 of the line is designated as a readout target.

Note that although the readout control section 550 compares the count values of the spike groups, it is also possible to input the spike group to be compared to the softmax function and compare the output values. Furthermore, each of the spike groups has a one-to-one correspondence with the pixel, but may have a one-to-many correspondence. Moreover, the readout control section 550 can also adjust the frequency of reading rows and columns on the basis of the comparison result.

The readout control section 550 generates and outputs the readout control signal Ctrl for each line of the y coordinates y1 to yk. Therefore, the readout control section 550 can instruct the readout target pixel in units of rows and columns.

### [Configuration example of test pattern generation section]

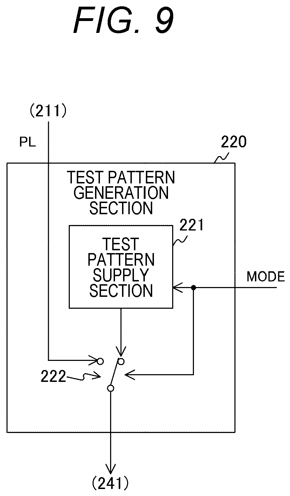

Fig. 9 is a block diagram illustrating a configuration example of the test pattern generation section 220 according to the first embodiment of the present technology. The test pattern generation section 220 includes a test pattern supply section 221 and a switch 222.

In a case where the test mode is set by the control signal MODE, the test pattern supply section 221 generates a predetermined test pattern and supplies the predetermined test pattern to the switch 222.

The switch 222 supplies the test pattern to the digital processing section 241 in a case where the test mode is set, and supplies the PL from the FIFO memory 211 to the digital processing section 241 in a case where a mode other than the test mode is set.

### [Operation example of photodetection device]

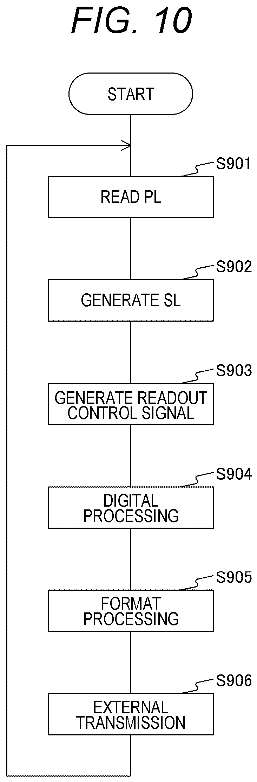

Fig. 10 is a flowchart illustrating an example of an operation of the photodetection device 100 according to the first embodiment of the present technology. This operation is started, for example, in a case where a predetermined application for capturing image data is executed.

The EVS 300 sequentially reads the PL according to the readout control signal (step S901). Note that, in the initial state, all the pixels are read. Furthermore, the SNN processor 500 generates the SL (step S902) and generates a readout control signal (step S903). Furthermore, the digital processing section 241 performs digital processing on each of the PLs (step S904). Furthermore, the format processing section 251 generates a communication frame by format processing (step S905), and the external communication interface 261 externally transmits the communication frame (step S906). After step S906, step S901 and subsequent steps are repeatedly executed.

As described above, according to the first embodiment of the present technology, since the readout control section 550 generates the readout control signal on the basis of the SL, it is possible to reduce the output rate and suppress an increase in processing delay and power consumption. Therefore, the performance of the photodetection device 100 can be improved.

### [First modification]

In the first embodiment described above, only the PL is input to the SNN processor 500, but in order for the SNN processor 500 to identify a line corresponding to the PL, identification information (such as a line number) of the line can also be input. A photodetection device 100 in a first modification of the first embodiment is different from that of the first embodiment in that an EVS 300 inputs line identification information and a PL to an SNN processor 500.

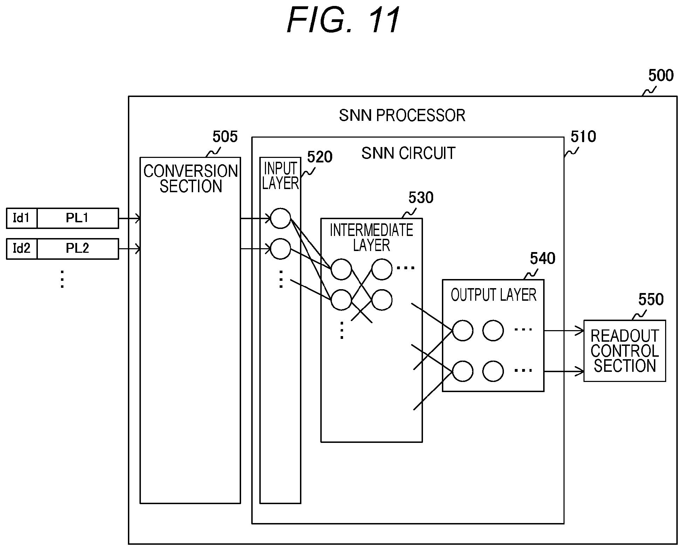

Fig. 11 is a block diagram illustrating a configuration example of the SNN processor 500 in the first modification of the first embodiment of the present technology.

In the first modification of the first embodiment, the EVS 300 reads the PL by an arbiter method or a scan method. Then, the EVS 300 adds identification information (such as a line number) of the corresponding line for each PL, and inputs the information to the SNN processor 500 via a FIFO memory 211.

Furthermore, the SNN processor 500 further includes a conversion section 505. The conversion section 505 converts at least one of identification information Id and the corresponding PL, and supplies the identification information Id and the corresponding PL to the SNN circuit 510.

For example, the conversion section 505 inputs the PL as it is to the SNN circuit 510, and converts the identification information Id into vector data or the like to input.

Alternatively, the conversion section 505 inputs the identification information Id as it is to the SNN circuit 510, and converts the PL into frequency information (a phase value, a scalar value, or the like) by Fourier transform or the like to input.

Note that the conversion section 505 can also convert both the identification information Id and the PL.

As illustrated in the drawing, the conversion section 505 converts at least one of the identification information and the PL and inputs the converted information to the SNN circuit 510, so that the readout control section 550 at the subsequent stage can specify the line corresponding to the SL from the identification information. Therefore, the readout control section 550 can generate the readout control signal.

As described above, according to the first modification of the first embodiment of the present technology, since the conversion section 505 converts at least one of the identification information and the PL and inputs the converted information to the SNN circuit 510, the readout control section 550 can generate the readout control signal on the basis of the data.

### [Second modification]

In the first embodiment described above, the SNN circuit 510 outputs the SL, but it is also possible to output a state value of the membrane potential in chronological order instead of the SL. A photodetection device 100 in a second modification of the first embodiment is different from that of the first embodiment in that an SNN circuit 510 outputs a state value of the membrane potential in chronological order.

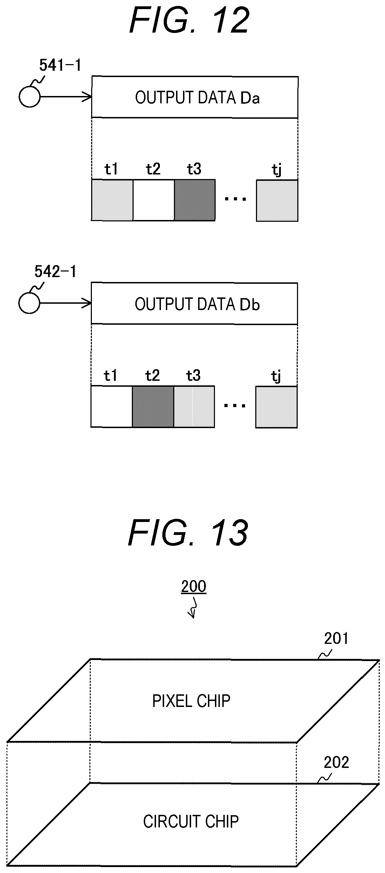

Fig. 12 is a diagram illustrating an example of a state line in the second modification of the first embodiment of the present technology. Pairs such as neurons 541-1 and 542-1 in the second modification of the first embodiment output output data Da and Db. Each piece of output data includes a plurality of bit strings indicating the state values of the membrane potential in chronological order. In the drawing, t1 to tj indicate times when the bit string is output. The rectangle in the lower part of the time is a bit string of two or more bits indicating the state value at that time. Furthermore, the darker the color of the rectangle, the larger the state value.

Furthermore, the respective state values from the time t1 to the time tj are values corresponding to the respective pixels of the x coordinates x1 to xj. The readout control section 550 compares the state values of the respective neurons at the same time, and determines whether or not to read the pixel corresponding to the time on the basis of the comparison result.

Note that the first modification can be applied to the second modification of the first embodiment.

As described above, according to the second modification of the first embodiment of the present technology, since the SNN circuit 510 outputs the state values of the membrane potential in chronological order, the readout control section 550 can generate the readout control signal on the basis of these state values.

### [Third modification]

In the first embodiment described above, a circuit such as the EVS 300 is disposed on a single semiconductor chip, but in this configuration, it may be difficult to increase the number of pixels. A photodetection device 100 according to a third modification of the first embodiment is different from that of the first embodiment in that circuits are dispersedly disposed on two stacked semiconductor chips.

Fig. 13 is a diagram illustrating an example of a stacked structure of the sensor chip 200 in the third modification of the first embodiment of the present technology. The sensor chip 200 of the third modification of the first embodiment includes a pixel chip 201 and a circuit chip 202. These chips are stacked and are electrically connected by, for example, Cu-Cu bonding. Note that, in addition to the Cu-Cu bonding, the connection can be made using a via or a bump.

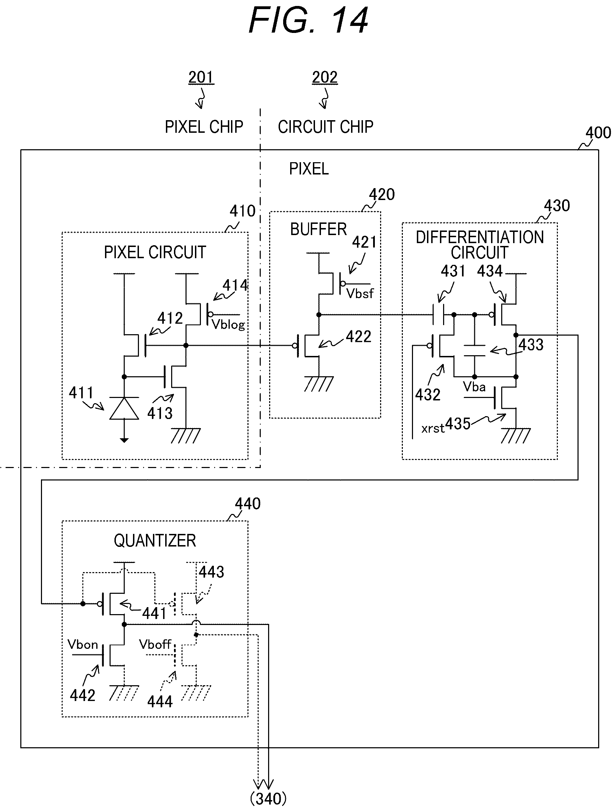

Fig. 14 is a circuit diagram illustrating a configuration example of the pixel 400 in the third modification of the first embodiment of the present technology. Among the pixels 400, for example, the pixel circuit 410 is disposed on the pixel chip 201, and circuits subsequent to the buffer 420 are disposed on the circuit chip 202.

Note that the circuits arranged on the respective chips are not limited to those illustrated in the drawing. For example, the photodiode 411 and the nMOS transistors 412 and 413 may be disposed in the pixel chip 201, and the remaining circuits may be disposed in the circuit chip 202. Alternatively, only the photodiode 411 may be disposed in the pixel chip 201, and the remaining circuits may be disposed in the circuit chip 202.

Note that each of the first and second modifications can be applied to the third modification of the first embodiment.

As described above, according to the third modification of the first embodiment of the present technology, since the circuits are dispersedly disposed in the two stacked chips, the circuit scale per chip can be reduced. This facilitates the increase in the number of pixels.

### [Fourth modification]

In the first embodiment described above, a circuit such as the EVS 300 is disposed on a single semiconductor chip, but in this configuration, it may be difficult to increase the number of pixels. A photodetection device 100 according to a fourth modification of the first embodiment is different from that of the first embodiment in that circuits are dispersedly disposed on three stacked semiconductor chips.

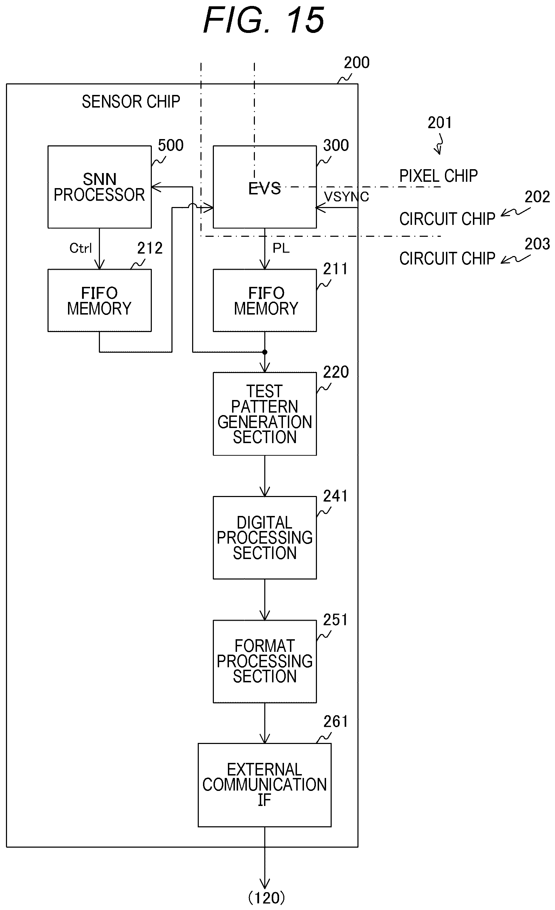

Fig. 15 is a diagram illustrating an example of a stacked structure of a sensor chip 200 in the fourth modification of the first embodiment of the present technology. In the fourth modification of the first embodiment, the sensor chip 200 includes a pixel chip 201, a circuit chip 202, and a circuit chip 203 which are stacked. Some of the pixels of EVS 300 (such as pixel circuits 410) are disposed on the pixel chip 201 and the remaining circuits of EVS 300 are disposed on the circuit chip 202. Furthermore, circuits subsequent to the FIFO memory 211 are disposed in the circuit chip 203. Note that the circuits arranged on the respective chips are not limited to those illustrated in the drawing. Furthermore, the number of chips to be stacked is not limited to three, and may be four or more.

Note that each of the first and second modifications can be applied to the fourth modification of the first embodiment.

As described above, according to the fourth modification of the first embodiment of the present technology, since the circuits are dispersedly disposed in the three stacked chips, the circuit scale per chip can be reduced. This facilitates the increase in the number of pixels.

### <2. Second embodiment>

In the first embodiment described above, the SNN processor 500 generates the readout control signal, but in this configuration, it is necessary to add the readout control section 550 in the SNN processor 500. A photodetection device 100 in a second embodiment is different from that in the first embodiment in that a digital processing section in a subsequent stage generates a readout control signal.

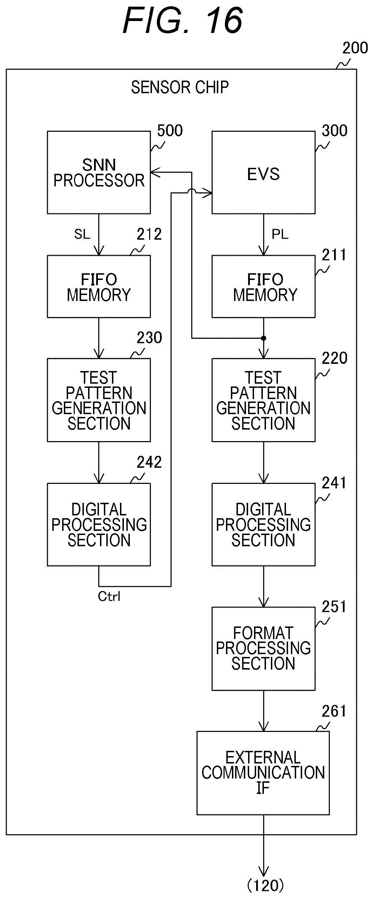

Fig. 16 is a block diagram illustrating a configuration example of a sensor chip 200 according to the second embodiment of the present technology. The sensor chip 200 in the second embodiment is different from that in the first embodiment in further including a test pattern generation section 230 and a digital processing section 242.

In the second embodiment, an SNN processor 500 outputs an SL to a FIFO memory 212 without generating a readout control signal Ctrl.

A test pattern generation section 220 supplies a test pattern to a digital processing section 241 in the case of the test mode, and reads the SL from the FIFO memory 212 and supplies the SL to the digital processing section 242 in the case of not the test mode.

The digital processing section 242 generates the readout control signal Ctrl on the basis of the SL and outputs the readout control signal Ctrl to an EVS 300. Note that the digital processing section 242 is an example of a readout control section recited in the claims.

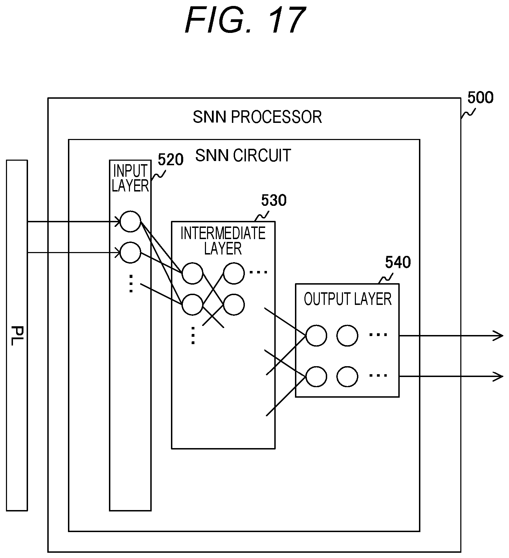

Fig. 17 is a block diagram illustrating a configuration example of the SNN processor 500 according to the second embodiment of the present technology. As illustrated in the drawing, the SNN processor 500 in the second embodiment is different from that in the first embodiment in that a readout control section 550 is not disposed.

As illustrated in Figs. 16 and 17, the digital processing section 242 generates the readout control signal, so that the readout control sections 550 in the SNN processor 500 can be reduced.

Note that each of the first to fourth modifications of the first embodiment can be applied to the second embodiment.

As described above, according to the second embodiment of the present technology, since the digital processing section 242 generates the readout control signal instead of the SNN processor 500, the circuit scale of the SNN processor 500 can be reduced.

### [Modification]

In the second embodiment described above, the sensor chip 200 does not externally output the SL and the processing result thereof, but they can also be externally output. A sensor chip 200 according to a modification of the second embodiment is different from that of the first embodiment in that the SL or the like is externally output.

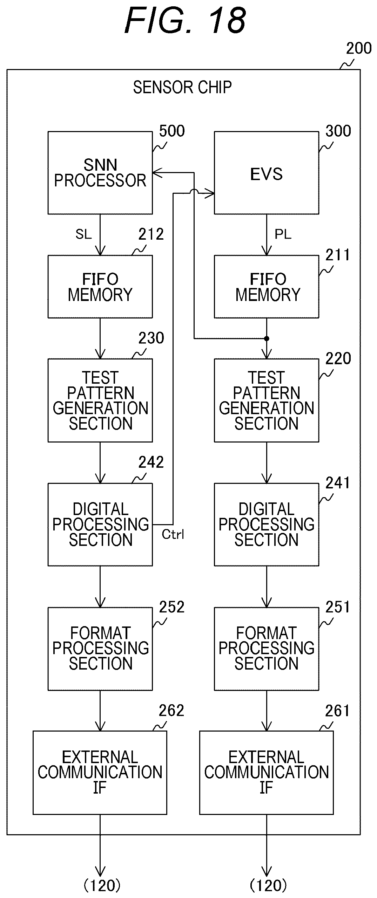

Fig. 18 is a block diagram illustrating a configuration example of the sensor chip 200 in the modification of the second embodiment of the present technology. The sensor chip 200 in the modification of the second embodiment is different from the second embodiment in further including a format processing section 252 and an external communication interface 262.

Furthermore, in the second embodiment, the digital processing section 242 generates the readout control signal and performs various digital processes on the SL as necessary. The digital processing section 242 outputs the SL after the processing to the format processing section 252.

The format processing section 252 generates a communication frame storing the SL or the like. The format processing section 252 supplies the generated communication frame to the external communication interface 262.

The external communication interface 262 transmits the communication frame from the format processing section 252 to the DSP circuit 120 or the like.

Note that each of the first to fourth modifications of the first embodiment can be applied to the modification of the second embodiment.

As described above, according to the modification of the second embodiment of the present technology, since the sensor chip 200 further externally outputs the SL, a circuit outside the sensor chip 200 can use the data.

### <3. Third embodiment>

In the first embodiment described above, the EVS 300 is used as a sensor that generates the PL, but a photon measurement circuit that counts photons can also be used instead of the EVS 300. A photodetection device 100 according to a third embodiment is different from that of the first embodiment in that a photon measurement circuit is used instead of the EVS 300.

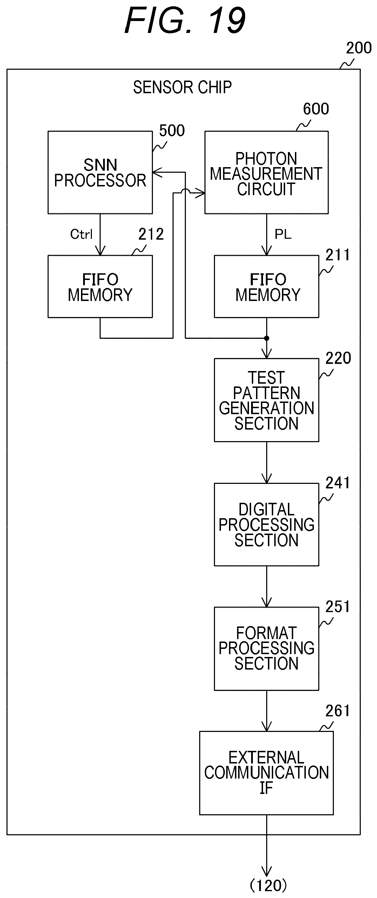

Fig. 19 is a block diagram illustrating a configuration example of a sensor chip 200 according to the third embodiment of the present technology. The sensor chip 200 in the third embodiment is different from that in the first embodiment in that a photon measurement circuit 600 is disposed instead of the EVS 300. Note that the photon measurement circuit 600 is an example of a sensor recited in the claims.

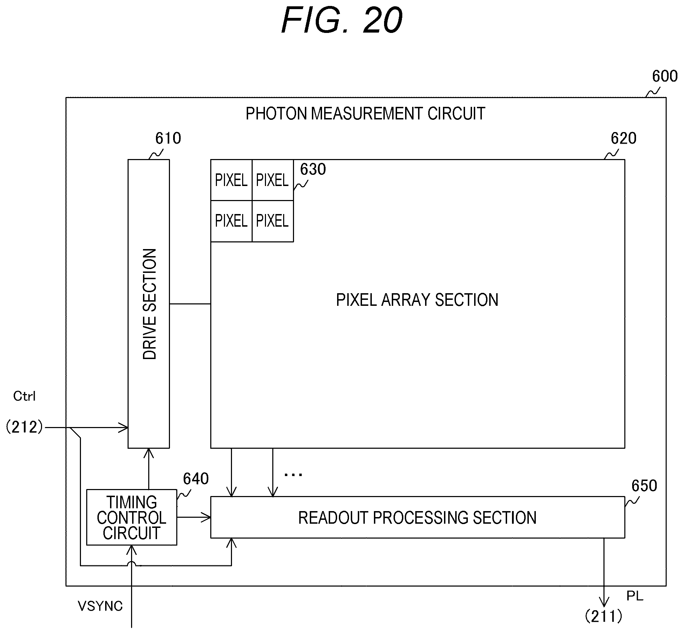

Fig. 20 is a block diagram illustrating a configuration example of the photon measurement circuit 600 according to the third embodiment of the present technology. The photon measurement circuit 600 includes a drive section 610, a pixel array section 620, a timing control circuit 640, and a readout processing section 650. In the pixel array section 620, a plurality of pixels 630 is arranged in a two-dimensional lattice pattern.

The functions of the drive section 610, the pixel array section 620, the timing control circuit 640, and the readout processing section 650 are similar to those of the drive section 310, the pixel array section 320, the timing control circuit 330, and the line scanner 340.

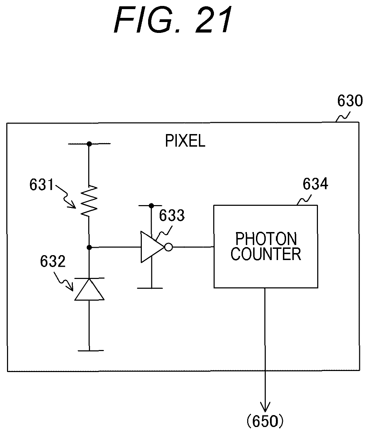

Fig. 21 is a circuit diagram illustrating a configuration example of the pixel 630 according to the third embodiment of the present technology. The pixel 630 includes a quench resistor 631, a single-photon avalanche diode (SPAD) 632, an inverter 633, and a photon counter 634.

The quench resistor 631 and the SPAD 632 are connected in series. The inverter 633 inverts a voltage signal at a connection point between the quench resistor 631 and the SPAD 632 and supplies the inverted voltage signal as a pulse signal to the photon counter 634. The photon counter 634 counts the number of pulses of the pulse signal and supplies pixel data indicating the count value to the readout processing section 650.

In the case of counting photons, each piece of pixel data in the PL is a bit string of two or more bits indicating a count value. However, as in the first embodiment, it is preferable to convert each piece of pixel data into 1-bit information. In a case where the conversion is performed, for example, a conversion circuit that converts the bit string into 1 bit for each pixel is inserted in a preceding stage of the SNN circuit 510.

Note that the circuit configuration of the pixel 630 is not limited to that illustrated in the drawing as long as photons can be counted.

Furthermore, to the third embodiment, each of the first, second, third, and fourth modifications of the first embodiment, the second embodiment, and the modification of the second embodiment can be applied.

As described above, according to the third embodiment of the present technology, since the photon measurement circuit 600 is disposed instead of the EVS 300, it is possible to suppress a processing delay and an increase in power consumption at the subsequent stage of the photon measurement circuit 600.

### <4. Fourth embodiment>

In the first embodiment described above, the EVS 300 is used as a sensor that generates the PL, but a CIS can also be used instead of the EVS 300. The photodetection device 100 according to a fourth embodiment is different from that of the first embodiment in that a CIS is used instead of the EVS 300.

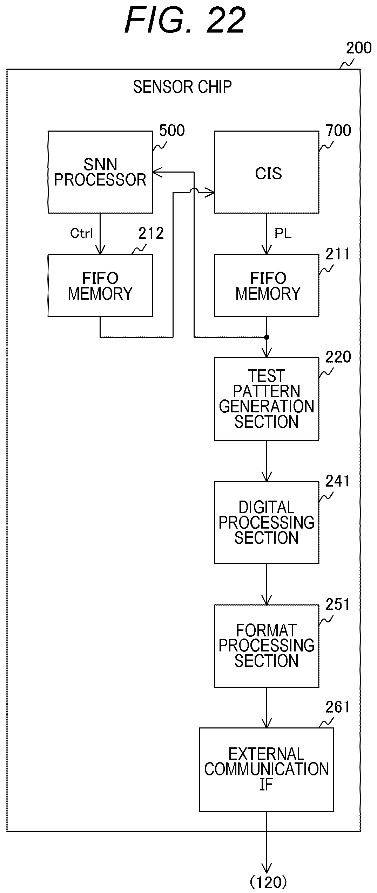

Fig. 22 is a block diagram illustrating a configuration example of a sensor chip 200 according to the fourth embodiment of the present technology. The sensor chip 200 in the fourth embodiment is different from that in the first embodiment in that a CIS 700 is disposed instead of the EVS 300. Note that the CIS 700 is an example of a sensor recited in the claims.

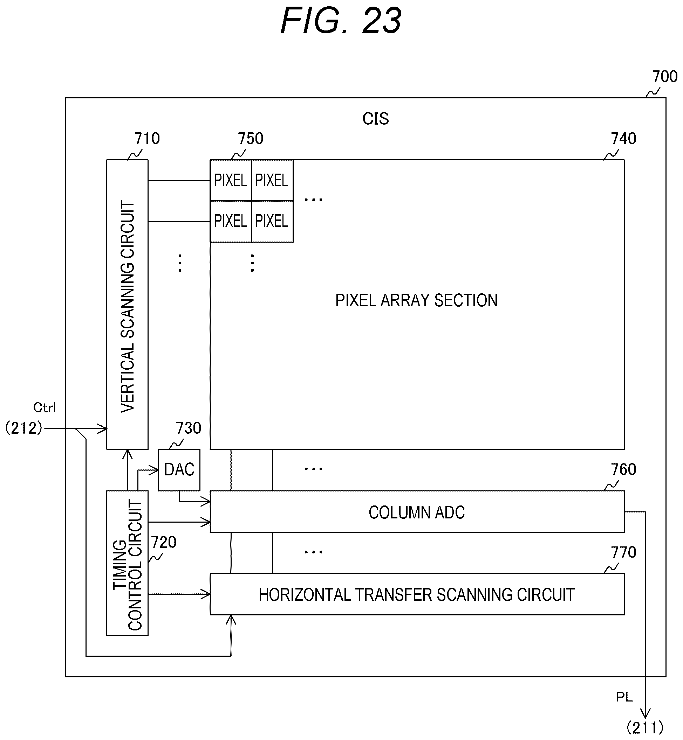

Fig. 23 is a block diagram illustrating a configuration example of the CIS 700 according to the first embodiment of the present technology. The CIS 700 includes a vertical scanning circuit 710, a timing control circuit 720, a digital to analog converter (DAC) 730, a pixel array section 740, a column ADC 760, and a horizontal transfer scanning circuit 770. In the pixel array section 740, the pixels 750 are arranged in a two-dimensional lattice pattern.

The vertical scanning circuit 710 sequentially selects and drives rows and outputs analog pixel signals to the column ADC 760. The timing control circuit 720 generates a horizontal synchronization signal from a vertical synchronization signal and supplies the horizontal synchronization signal to the horizontal transfer scanning circuit 770.

The DAC 730 generates a predetermined reference signal and supplies the generated reference signal to the column ADC 760. For example, a sawtooth-shaped ramp signal is used as the reference signal.

The column ADC 760 includes an ADC for each column, and performs analog to digital (AD) conversion on each pixel signal of the column. The column ADC 760 generates the PL according to the control of the horizontal transfer scanning circuit 770 and outputs the PL to the FIFO memory 211.

The horizontal transfer scanning circuit 770 controls the column ADC 760 to sequentially output the pixel data.

As described above, in the CIS, each piece of pixel data in the PL is a bit string of two or more bits indicating the gradation value of the pixel. However, as in the first embodiment, it is preferable to convert each piece of pixel data into 1-bit information. In a case where the conversion is performed, for example, a conversion circuit that converts the bit string into 1 bit for each pixel is inserted in a preceding stage of the SNN circuit 510.

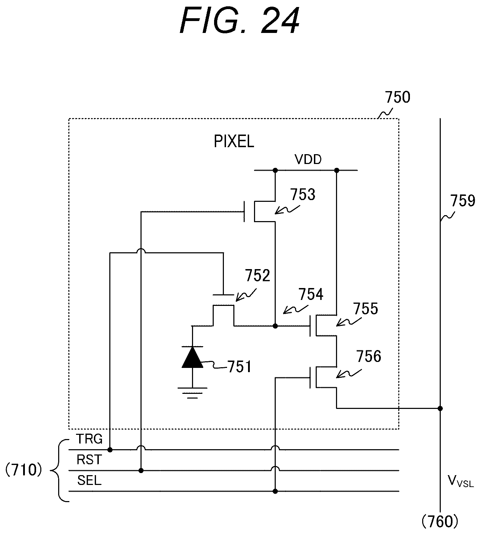

Fig. 24 is a circuit diagram illustrating a configuration example of the pixel 750 according to the fourth embodiment of the present technology. The pixel 750 includes a photodiode 751, a transfer transistor 752, a reset transistor 753, a floating diffusion layer 754, an amplification transistor 755, and a selection transistor 756.

The photodiode 751 photoelectrically converts incident light to generate a charge. The transfer transistor 752 transfers a charge from the photodiode 751 to the floating diffusion layer 754 in accordance with a transfer signal TRG from the vertical scanning circuit 710.

The reset transistor 753 extracts and initializes charges from the floating diffusion layer 754 in accordance with a reset signal RST from the vertical scanning circuit 710. The floating diffusion layer 754 accumulates charges and generates a voltage corresponding to the charge amount.

The amplification transistor 755 amplifies the voltage of the floating diffusion layer 754. The selection transistor 756 outputs a signal of the amplified voltage as a pixel signal according to a selection signal SEL from the vertical scanning circuit 710.

Furthermore, in the pixel array section 740, a vertical signal line 759 is wired for each column, and the pixel signal of each of the pixels 750 in the column is output to the column ADC 760 via the vertical signal line 759 of the column.

Note that the circuit configuration of the pixel 750 is not limited to the configuration illustrated in the drawing as long as an analog pixel signal can be generated.

Furthermore, to the fourth embodiment, each of the first, second, third, and fourth modifications of the first embodiment, the second embodiment, and the modification of the second embodiment can be applied.

As described above, according to the fourth embodiment of the present technology, since the CIS 700 is disposed instead of the EVS 300, it is possible to suppress a processing delay and an increase in power consumption at the subsequent stage of the CIS 700.

### <5. Application example to mobile body>

The technology (the present technology) according to the present disclosure can be applied to various products. For example, the technology according to an embodiment of the present disclosure may also be implemented as a device mounted on any type of mobile body such as an automobile, an electric automobile, a hybrid electric automobile, a motorcycle, a bicycle, a personal mobility, an airplane, a drone, a ship, and a robot.

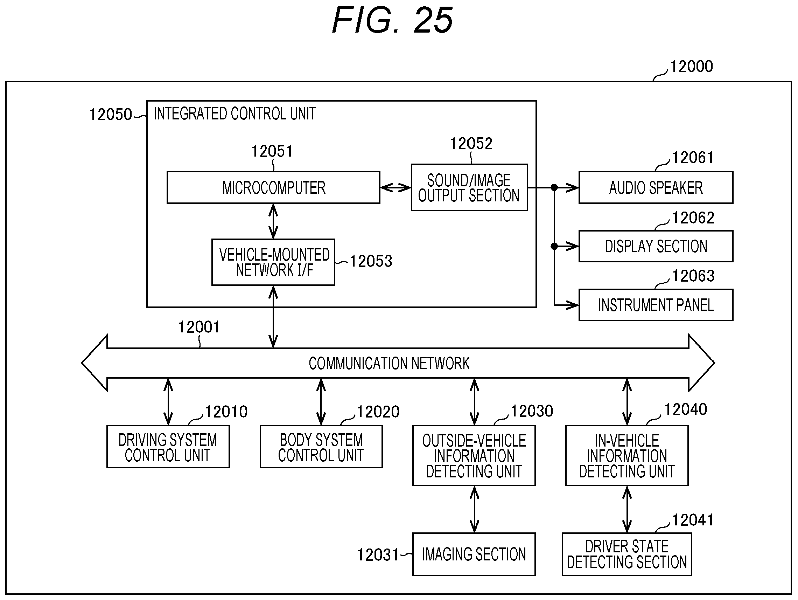

Fig. 25 is a block diagram illustrating a schematic configuration example of a vehicle control system as an example of a mobile body control system to which the technology according to the present disclosure can be applied.

The vehicle control system 12000 includes a plurality of electronic control units connected to each other via a communication network 12001. In the example illustrated in Fig. 25, the vehicle control system 12000 includes a driving system control unit 12010, a body system control unit 12020, an outside-vehicle information detecting unit 12030, an inside-vehicle information detecting unit 12040, and an integrated control unit 12050. Furthermore, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

Furthermore, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 25, an audio speaker 12061, a display section 12062, and an instrument panel 12063 are depicted as the output device. The display section 12062 may, for example, include at least one of an on-board display and a head-up display.

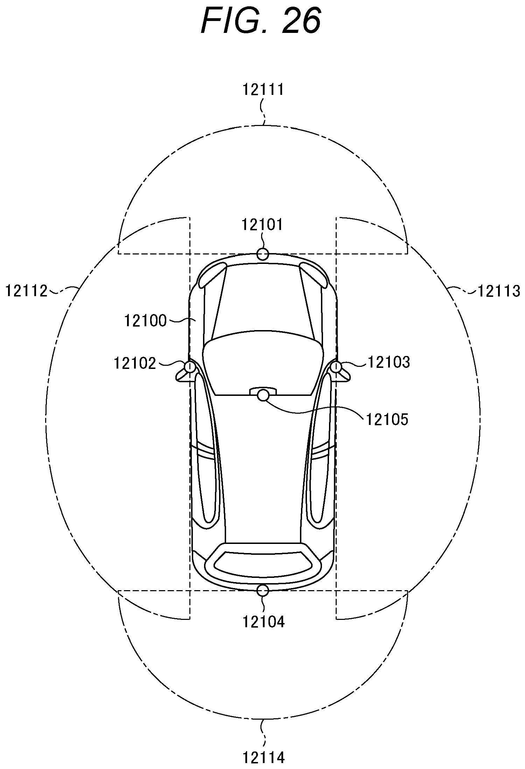

Fig. 26 is a diagram illustrating an example of the installation position of the imaging section 12031.

In Fig. 26, imaging sections 12101,12102,12103,12104, and 12105 are included as the imaging section 12031.

The imaging sections 12101, 12102, 12103, 12104, 12105 are provided, for example, at positions such as a front nose, a sideview mirror, a rear bumper, a back door, and an upper portion of a windshield in the interior of a vehicle 12100. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Note that Fig. 26 illustrates an example of imaging ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of the vehicle control system to which the technology according to the present disclosure can be applied has been described above. The technology according to the present disclosure can be applied to, for example, the imaging section 12031 among the configurations described above. Specifically, the photodetection device 100 of Fig. 1 can be applied to the imaging section 12031. By applying the technology according to the present disclosure to the imaging section 12031, it is possible to improve the performance of the system by suppressing a processing delay and an increase in power consumption.

Note that the embodiments described above show examples for embodying the present technology, and the matters in the embodiments and the matters specifying the invention in the claims have correspondence relationships. Similarly, the matters specifying the invention in the claims and matters with the same names in the embodiments of the present technology have correspondence relationships. However, the present technology is not limited to the embodiments, and can be embodied by applying various modifications to the embodiments without departing from the gist of the present technology.

Note that the effects described in the present description are merely exemplifications and are not limited, and furthermore, other effects may be provided.

Note that the present technology may also have the following configurations.
(1) A photodetection device including:
   a sensor that reads from a pixel array section sensor data in which a plurality of pieces of pixel data is arranged;
   a neural network circuit that processes the sensor data on the basis of a neural network model and outputs line data in which a plurality of processing results is arranged; and
   a readout control section that generates a readout control signal instructing a readout target pixel group in the pixel array section on the basis of the line data.
(2) The photodetection device according to (1) described above, in which
   the line data includes first line data and second line data,
   the neural network circuit outputs the first line data and the second line data in parallel, and
   the readout control section compares the first line data with the second line data and generates the readout control signal on the basis of a comparison result.
(3) The photodetection device according to (2) described above, in which
   the neural network model includes a spiking neural network model,
   each of the first line data and the second line data includes a plurality of bit strings, and
   each of the plurality of bit strings includes a plurality of bits indicating detection results of spikes in chronological order.
(4) The photodetection device according to (2) described above, in which
   the neural network model includes a spiking neural network model, and
   each of the first line data and the second line data includes a plurality of bit strings indicating a state value of a membrane potential in chronological order.
(5) The photodetection device according to any one of (1) to (4) described above, further including
   a conversion section that converts at least one of identification information and the sensor data and supplies the converted one to the neural network circuit, in which
   the sensor outputs the identification information together with the sensor data.
(6) The photodetection device according to any one of (1) to (5) described above, further including:
   a first first in, first out (FIFO) memory that holds the sensor data in a first-in first-out manner; and
   a second FIFO memory that holds the readout control signal in the first-in first-out manner, in which
   the neural network circuit reads the sensor data from the first FIFO memory, and
   the sensor reads the readout control signal from the second FIFO memory.
(7) The photodetection device according to any one of (1) to (5) described above, further including:
   a first FIFO memory that holds the sensor data in a first-in first-out manner; and
   a second FIFO memory that holds the line data in the first-in first-out manner, in which
   the neural network circuit reads the sensor data from the first FIFO memory, and
   the readout control section reads the line data from the second FIFO memory.
(8) The photodetection device according to (7) described above, further including:
   a digital processing section that reads the sensor data from the first FIFO memory and processes the sensor data; and
   a first format processing section that generates a communication frame storing the sensor data.
(9) The photodetection device according to (8) described above, further including
   a second format processing section that generates a communication frame storing the line data, in which
   the readout control section outputs the line data to the second format processing section.
(10) The photodetection device according to any one of (1) to (9) described above, in which
   the sensor includes an event-based vision sensor (EVS).
(11) The photodetection device according to any one of (1) to (9) described above, in which
   the sensor includes a photon measurement circuit that counts photons.
(12) The photodetection device according to any one of (1) to (9) described above, in which
   the sensor includes a CMOS image sensor (CIS).
(13) The photodetection device according to any one of (1) to (12) described above, in which
   the sensor, the neural network circuit, and the readout control section are dispersedly disposed on a plurality of stacked chips.
(14) A control method of a photodetection device, the control method including:
   a procedure of, by a sensor, reading from a pixel array section sensor data in which a plurality of pieces of pixel data is arranged;
   a procedure of processing the sensor data on the basis of a neural network model and outputting line data in which a plurality of processing results is arranged; and
   a readout control procedure of generating a readout control signal instructing a readout target pixel group in the pixel array section on the basis of the line data.

### REFERENCE SIGNS LIST

100 Photodetection device
110 Optical section
120 DSP circuit
130 Display section
140 Operation section
150 Bus
160 Frame memory
170 Storage section
180 Power supply section
200 Sensor chip
201 Pixel chip
202, 203 Circuit chip
211, 212, 581 to 585 FIFO memory
220, 230 Test pattern generation section
221 Test pattern supply section
222 Switch
241, 242 Digital processing section
251, 252 Format processing section
261, 262 External communication interface
300 EVS
310, 610 Drive section
320, 620, 740 Pixel array section
330, 640, 720 Timing control circuit
340 Line scanner
400, 630, 750 Pixel
410 Pixel circuit
411, 751 Photodiode
412, 413, 435, 442, 444 nMOS transistor
414, 421, 422, 432, 434, 441, 443 pMOS transistor
420 Buffer
430 Differentiation circuit
431, 433 Capacitor
440 Quantizer
500 SNN processor
505 Conversion section
510 SNN circuit
520 Input layer
530 Intermediate layer
540 Output layer
541-1 to 541-k, 542-1 to 542-k Neuron
550 Readout control section
560 Input/output interface
570 Multi-core array
580 Router
586 Arbiter
590 Core
591 Core router
592 Neuron I/O
593 Product-sum unit
594 Work memory
595 Membrane potential memory
596 LIF unit
600 Photon measurement circuit
631 Quench resistor
632 SPAD
633 Inverter
634 Photon counter
650 Readout processing section
700 CIS
710 Vertical scanning circuit
730 DAC
752 Transfer transistor
753 Reset transistor
754 Floating diffusion layer
755 Amplification transistor
756 Selection transistor
760 Column ADC
770 Horizontal transfer scanning circuit
12031 Imaging section

## Claims

1. A photodetection device comprising:
a sensor that reads from a pixel array section sensor data in which a plurality of pieces of pixel data is arranged;
a neural network circuit that processes the sensor data on a basis of a neural network model and outputs line data in which a plurality of processing results is arranged; and
a readout control section that generates a readout control signal instructing a readout target pixel group in the pixel array section on a basis of the line data.

2. The photodetection device according to claim 1, wherein
the line data includes first line data and second line data,
the neural network circuit outputs the first line data and the second line data in parallel, and
the readout control section compares the first line data with the second line data and generates the readout control signal on a basis of a comparison result.

3. The photodetection device according to claim 2, wherein
the neural network model includes a spiking neural network model,
each of the first line data and the second line data includes a plurality of bit strings, and
each of the plurality of bit strings includes a plurality of bits indicating detection results of spikes in chronological order.

4. The photodetection device according to claim 2, wherein
the neural network model includes a spiking neural network model, and
each of the first line data and the second line data includes a plurality of bit strings indicating a state value of a membrane potential in chronological order.

5. The photodetection device according to claim 1, further comprising
a conversion section that converts at least one of identification information and the sensor data and supplies the converted one to the neural network circuit, wherein
the sensor outputs the identification information together with the sensor data.

6. The photodetection device according to claim 1, further comprising:
a first first in, first out (FIFO) memory that holds the sensor data in a first-in first-out manner; and
a second FIFO memory that holds the readout control signal in the first-in first-out manner, wherein
the neural network circuit reads the sensor data from the first FIFO memory, and
the sensor reads the readout control signal from the second FIFO memory.

7. The photodetection device according to claim 1, further comprising:
a first FIFO memory that holds the sensor data in a first-in first-out manner; and
a second FIFO memory that holds the line data in the first-in first-out manner, wherein
the neural network circuit reads the sensor data from the first FIFO memory, and
the readout control section reads the line data from the second FIFO memory.

8. The photodetection device according to claim 7, further comprising:
a digital processing section that reads the sensor data from the first FIFO memory and processes the sensor data; and
a first format processing section that generates a communication frame storing the sensor data.

9. The photodetection device according to claim 8, further comprising
a second format processing section that generates a communication frame storing the line data, wherein
the readout control section outputs the line data to the second format processing section.

10. The photodetection device according to claim 1, wherein
the sensor includes an event-based vision sensor (EVS).

11. The photodetection device according to claim 1, wherein
the sensor includes a photon measurement circuit that counts photons.

12. The photodetection device according to claim 1, wherein
the sensor includes a CMOS image sensor (CIS).

13. The photodetection device according to claim 1, wherein
the sensor, the neural network circuit, and the readout control section are dispersedly disposed on a plurality of stacked chips.

14. A control method of a photodetection device, the control method comprising:
a procedure of, by a sensor, reading from a pixel array section sensor data in which a plurality of pieces of pixel data is arranged;
a procedure of processing the sensor data on a basis of a neural network model and outputting line data in which a plurality of processing results is arranged; and
a readout control procedure of generating a readout control signal instructing a readout target pixel group in the pixel array section on a basis of the line data.
